# EUROPEAN PATENT APPLICATION

(11) **EP 4 775 728 A1**
(43) Date of publication of application: **15.07.2026**
(21) Application number: 26151275.0
(22) Date of filing: 12.01.2026
(51) Int. Cl.: E01B 31/18, E01B 29/42, E01B 11/50, E01B 11/52, B23K 11/00, B23K 11/04, E01B 31/08, E01B 31/04, B23K 23/00

(54) **PROCESS FOR REPLACING A WORN OR DEFECTIVE RAIL SECTION OF A METRO-RAILWAY LINE**

(30) Priority: 14.01.2025 IT 202500000501
(71) Applicant: Azienda Trasporti Milanesi S.p.A., 20121 Milano (IT)
(72) Inventor: CONTE, Roberto, 20121 Milano (IT); RIBOLI, Massimiliano, 20121 Milano (IT)
(74) Representative: Rapisardi, Mariacristina

(57) **Abstract**

Process for replacing a worn or defective rail section (7) of a metro-railway line (100), which provides for remotely forming a replacement rail section (5) by carrying out, on a dedicated straight welding track, a series of flash-butt welds (3) between precisely aligned standard-length rail bars (4); on site, adapting the curvature of the replacement rail section (5) to the curvature of the line (100) in the worn or defective rail section (7) if the line (100) in the worn or defective rail section (7) includes at least one curve; cutting the replacement rail section (5) to size; and replacing the worn or defective rail section (7) by joining its ends to the rail still in place by means of aluminothermic welds (12).

## Description

The present invention relates to a process for replacing a worn or defective rail section of a metro-railway line.

It is known that the rails of a railway line, in general, after a certain period of operation need to be replaced.

In particular, rails need to be replaced when they are worn beyond a certain acceptable limit imposed by technical regulations or suggested by the track designer, or when they are affected by integrity defects arising from mechanical fatigue of the material.

The duration of the operating period after which it becomes necessary to replace the rails is difficult to estimate a priori, since it depends on numerous factors, such as, for example, the stress to which the rail is subjected in terms of magnitude and frequency of the load cycles due to the passage of railway vehicle axles, the presence or occurrence of metallurgical defects within the metal, and in general all factors influencing the fatigue life of a component.

The moment when a rail needs to be replaced is therefore usually decided by assessing wear through periodic inspections or by detecting, by means of non-destructive testing techniques, the presence of mechanical integrity defects.

As is known, replacing a rail entails, in addition to the more evident operational and organizational issues, also the interruption of train service for the required time.

If, moreover, the damaged or worn rail is located in a poorly accessible place, such as a tunnel, the issues inevitably increase.

Some known processes for replacing rails in tunnels provide for welding standard 18-meter rail bars directly onto the track in place, generally by aluminothermic welds which, although extremely practical to perform even in confined environments, offer lower execution quality and may more frequently exhibit the occurrence of metallurgical or geometric defects, especially when carried out as part of maintenance activities, with limited working time available.

This occurs in particular when the replacement of a rail must affect a track section in a tight-radius curve. In this case, performing aluminothermic welds on rails in place is difficult while ensuring the prescribed requirements of longitudinal alignment and often presents angular points and discontinuities.

There is therefore a need to devise a process for replacing a long worn or defective rail section of a metro-railway line with a new long rail section, produced by higher-quality welds and with greater durability, and which at the same time is easy to handle and replace in place, considering the extremely common case in a metro network where the rail to be replaced is located in a tunnel. The technical task of the present invention is therefore to devise a process for replacing a worn or defective rail section of a metro-railway line that makes it possible to eliminate the technical drawbacks complained of in the known art.

Within this technical task, one object of the invention is to provide a process for replacing a worn or defective rail section of a metro-railway line that is simple to carry out even in positions with limited visibility and manoeuvrability such as a tunnel, reducing the execution on site of the most delicate and critical ancillary operations such as welding.

Another object of the invention is to provide a process for replacing a worn or defective rail section of a metro-railway line with a new replacement rail section characterized by mechanical resistance to fatigue cycles adequate for the purpose for which it was designed.

The technical task, as well as these and other objects, according to the present invention are achieved by providing a process for replacing a worn or defective rail section of a metro-railway line according to claim 1.

Advantageously, it was chosen to produce the replacement rail section at a remote station comprising a welding track and providing adequate open-air spaces that allow a greater margin of maneuver for carrying out welding operations with superior technologies and such as to permit better verification of execution quality thanks to appropriate non-destructive testing methods and, ultimately, better certification of the entire production process.

The adoption of flash welding technology proved to be particularly advantageous for the manufacture of the replacement rail section, as such a process is qualitatively superior and more controllable and certifiable.

In this way, the flash welding is not performed directly in a tunnel or in any case near the intervention location, this being impractical, as known to those skilled in the art, since it requires bringing the ends of the two rail bars to be joined together and compressing the two heads against each other, in order to start the flashing process and generate partial melting of the heads themselves, so as to obtain a slight interpenetration of molten metal that will ensure the weld. This bringing together and interpenetration of the heads to be joined is however disadvantageous because it introduces a shortening of the rails in place and thus introduces internal stresses into the rails and the loss of thermal adjustment. This drawback does not occur instead in long rails welded off-site, on the welding track, thanks to the possibility of allowing the rail bars to be welded to slide.

Other features of the present invention are also defined in the dependent claims.

Further features and advantages of the invention will become more apparent from the description of a preferred but not exclusive embodiment of the process according to the invention, illustrated by way of non-limiting example in the accompanying drawings, in which:

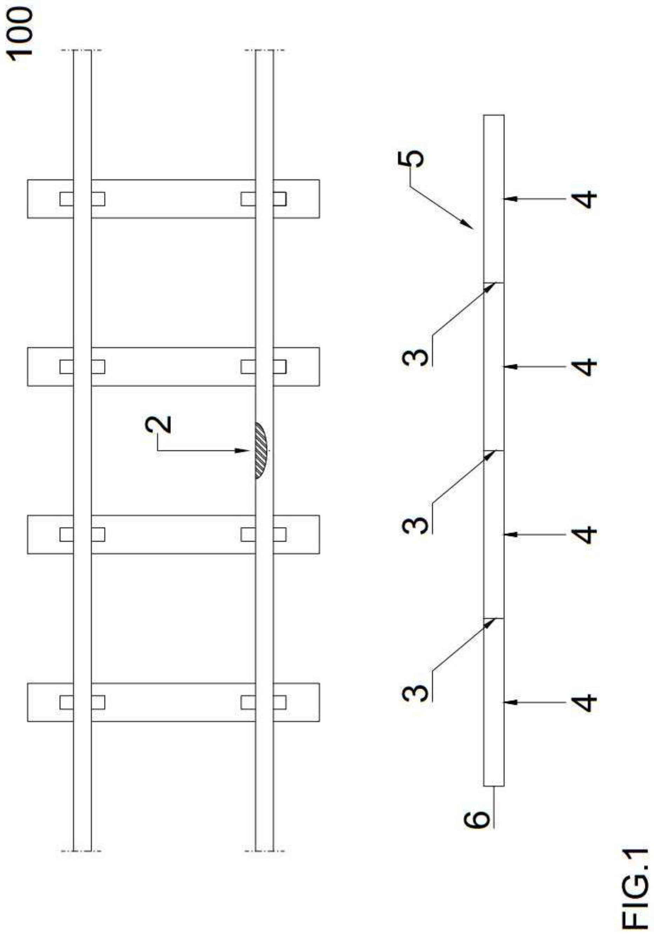

- Figure 1 shows the worn or defective rail section in the intervention position, and the replacement rail section in the waiting position;

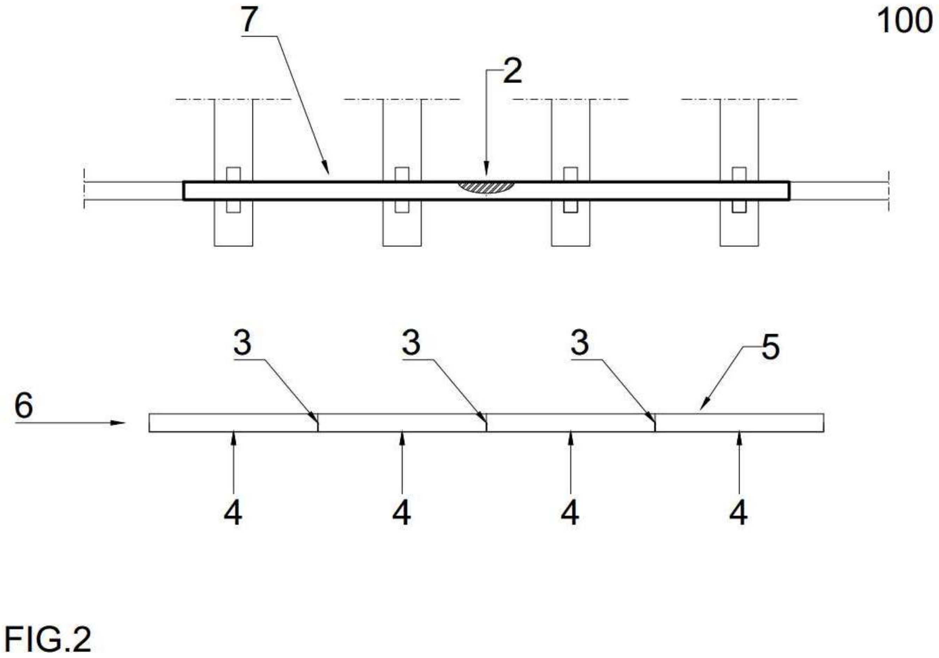

- Figure 2 shows the same elements as in Figure 1 following cutting of the worn or defective rail section;

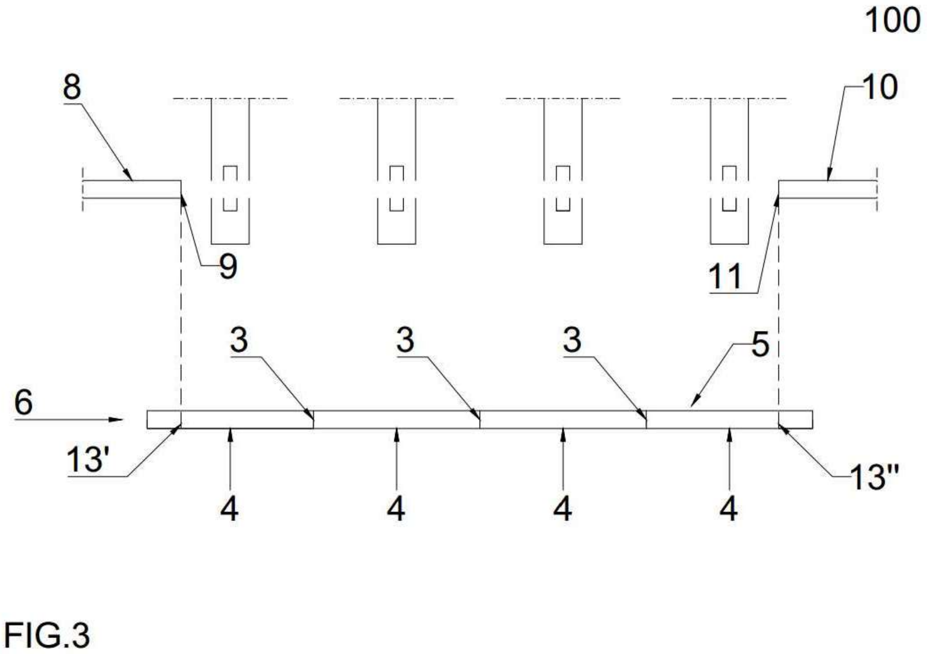

- Figure 3 shows the metro-railway line after removal of the worn or defective rail section, and shows the replacement rail section prepared to be cut in order to make it equal in length to the worn or defective rail section;

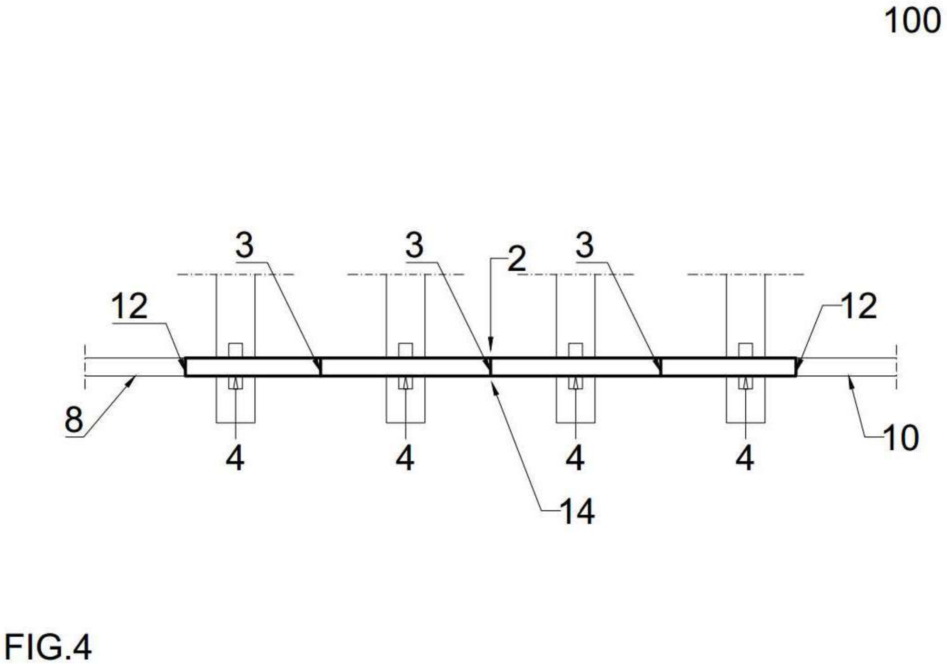

- Figure 4 shows the metro-railway line following the aluminothermic welds.

With reference to the cited figures, a process is shown for replacing a section of a rail 7 that is worn or contains defects of a running line 100.

In particular, the metro-railway line 100 is a metro line.

In particular, the metro-railway line 100 includes at least one section in a tunnel.

The worn or defective rail section 7 is located in an intervention position 2.

The process for replacing a section of a worn or defective rail 7 provides for flash-butt welding 3 of a plurality of standard-length rail bars 4, for example 18 meters, to form a replacement rail section 5 having a length greater than the worn or damaged rail section 7.

The aforementioned flash-butt welds 3 take place on a dedicated welding track.

The replacement rail section 5 has a linear weight between 50 and 60 kg/m, being characterized by 50 E5 and 60 E1 profiles according to the current UNI EN 13674-1 standard.

The replacement rail section 5 is up to 200 m long.

Greater lengths of the replacement rail section 5 are also possible, but greater lengths imply greater difficulties in performing the welds on the welding track in the depot and in transporting and moving the replacement rail section 5 in a tunnel.

The flash-butt welding 3 to form the replacement rail section 5 is carried out remotely on a dedicated welding track, in a depot outside the area of normal metro train operation.

The welding track is preferably straight, in an open environment and with adequate operating spaces.

Such adequate operating spaces allow precise alignment of the bars 4, so as to avoid misalignments.

The replacement rail section 5 is then transported from the welding track to the site, i.e., to the replacement location, in particular to a waiting position 6 for replacement.

The waiting position 6 for replacement is located along the metro-railway line, laterally to the worn or defective rail section 7 that is in the intervention position 2.

In this waiting position 6 the replacement rail section 5 waits for the worn or defective rail section 7 to be removed.

Transport of the replacement rail section 5 is carried out by means of a hauling locomotive towing rolling trolleys, hereinafter referred to as track elements, equipped with small cranes having clamping grips for loading and unloading the replacement rail section 5.

The track elements equipped with small cranes each have a capacity between 8,000 N and 12,000 N and are positioned at a maximum distance of 15 meters from one another.

The replacement rail section 5 has two ends which, during transport, overhang from the leading and trailing track elements by no more than 2 meters.

In the presence of curves in the worn or defective rail section 7, the replacement rail section 5 is not pre-bent on the welding track.

The process in fact provides for adapting on site the curvature of the replacement rail section 5 to the curvature of the line 100 in the rail section 7, if the line 100 in the rail section 7 contains at least one curve.

The process then provides for cutting the rail section 7, for a length shorter than the replacement rail section 5, but in any case of a length such as to entirely include the defects.

The rail section 7 must have a length shorter than the replacement rail section 5 because otherwise the replacement rail section 5 would not be able to cover the entire length of rail left free after removal of the rail section 7.

The method provides that the two ends of the rail section 7 are cut at a straight section of the line 100.

In this way it is avoided that the subsequent joint occurs in a curve, in which it is much more complicated to ensure alignment of the ends of the rails to be welded, due to the high level of vertical wear normally detectable in rails in a curve compared to that detectable in rails on straight track.

Upstream, the rail section 7 has a first rail portion 8 that remains in place and therefore will not be replaced, having a first free end 9, and downstream, a second rail portion 10 that remains in place and therefore will not be replaced, having a second free end 11.

The rail section 7 is then removed.

Removal of the rail section 7 also provides for dismantling fastening devices that fix the rail to the track substructure, consisting of railway sleepers or discrete supports fixed on a reinforced concrete slab or platform.

Removal of the rail section 7 is performed by cutting it into several segments for easier transport and moving it away from the intervention position 2.

The end cuts of the rail section 7 are made by means of a disc rail-cutting tool, called a cut-off saw; the intermediate cuts are instead performed quickly by means of an oxy-propane torch.

At this point, cutting is performed of a portion of the replacement rail section 5 with a length equal to the actual difference between the length of the replacement rail section 5 and the rail section 7. This cut is performed by means of a cut-off saw.

The two rail sections 5, 7 are not made exactly the same length, since it would be very difficult to guarantee a tolerance of a few millimeters both during production of the replacement rail section 5, which includes flash-butt welds 3 that are known to shorten the material, and during cutting of the rail section 7.

Producing the replacement rail section 5 with a length greater than necessary makes it possible to have some play, so as to be able to perform a first rough cut and then, if necessary, by means of finer machining, finish the two ends 13', 13" to the desired length.

At this point the cut replacement rail section 14 is moved from the waiting position 6 to the intervention position 2.

Such movement is carried out by means of trestles equipped with translatable small cranes. These trestles are able to shift laterally the cut replacement rail section 14, until it reaches the intervention position 2.

At this point, lateral and vertical alignment of the cut replacement rail section 14 with the first rail portion 8 and with the second rail portion 10 is carried out.

This phase provides in particular for vertical alignment to avoid a step between the first and second rail portions 8, 10 and the cut replacement rail section 14, and lateral alignment between the first and second rail portions 8, 10 and the replacement rail section 14, so as to avoid undesirable discontinuities at the joints.

The fact that the ends of the rail section 7 were cut at a straight section of the line 100 facilitates this operation, since it is well known to operators in the field that it is much simpler to align two tracks on a straight section rather than on a curve, also due to the smaller differential in vertical wear present.

After alignment, aluminothermic welding 12 is performed of the two ends 13', 13" of the cut replacement rail section 14 respectively with the first free end 9 and the second free end 11. Aluminothermic welds 12 offer lower execution quality than flash-butt welds and may more frequently exhibit the occurrence of metallurgical defects.

For this reason, it was advantageously chosen to perform the other joints of the replacement rail section 5 by means of flash-butt welds 3, which are performed on a dedicated welding track in a large open area in order to improve execution quality, being on the other hand more difficult to perform in a metro tunnel, and to perform only the two terminal welds by means of the aluminothermic technique.

For the same reason, it is preferable to replace the longest possible rail section, so as to minimize the number of aluminothermic welds per unit length present in the rails in place.

Thereafter, following the procedures and timing of the aluminothermic welding process 12, shearing of the excess metal generated during the aluminothermic welds 12 is carried out, and subsequently grinding of the residual burr to obtain the correct geometric profile of the welded joint.

This phase therefore aims to make the longitudinal and transverse profile of the end joints welded by the aluminothermic method 12 as uniform and continuous as possible, since they connect a bar made of new rails with the ends of rails already in place and therefore affected by potential wear or profile loss.

This helps to ensure very smooth subsequent passage of trains.

Finally, tightening and adjustment of the fastening devices on the cut replacement rail section 14 are performed, to fix it definitively to the track substructure.

In practice it has been found that the process for replacing a section of a worn or defective rail of a metro-railway line according to the invention is particularly advantageous because it allows replacement of a rail even in a typically poorly accessible area such as a metro tunnel, while at the same time maintaining extremely high intervention quality.

Transporting on site a very long rail section formed by bars already welded together in an area where it is easier to weld with more sophisticated and therefore more effective techniques, in fact, makes it possible to minimize the number of aluminothermic welds, which at the end of the process will be only two and, as a rule, made outside curved sections when the replacement of a rail must involve such a track layout element.

Carrying out flash-butt welds on a dedicated welding track in a depot makes it possible to join a replacement rail bar up to 200 meters long by producing welded joints characterized by high standards of metallurgical and geometric quality, since the welds are performed with rails precisely aligned on said welding track which has a straight layout.

This means that, once the replacement rail section is laid in the intervention position in the tunnel, on a tight-radius curved track section, the bar itself will assume a continuous geometric profile, free of angular points at the welds.

This circumstance instead occurs with particular frequency when welds are performed by the aluminothermic method directly on the track in line.

The process for replacing a section of a worn or defective rail of a metro-railway line thus conceived is susceptible to numerous modifications and variants, all falling within the scope of the inventive concept; moreover, all details may be replaced by technically equivalent elements.

In practice, the materials used, as well as the dimensions, may be any depending on requirements and on the state of the art.

## Claims

1. A process for replacing a worn or defective rail section (7) of a metro-railway line (100), **characterized in that** it comprises remotely forming a replacement rail section (5) by carrying out, on a straight welding track located remotely from the metro-railway line and configured to support and align rail bars during welding, a series of flash-butt welds (3) between rail bars (4) precisely aligned on said straight welding track, adapting the curvature of the replacement rail section (5) on-site to match the curvature of the line (100) in the worn or defective rail section (7) if the line (100) in the worn or defective rail section (7) contains at least one curve, cutting said replacement rail section (5) to the required length, and replacing the worn or defective rail section (7) with it by connecting its ends to the rail still in place using aluminothermic welds (12).

2. A process for replacing a worn or defective rail section (7) of a metro-railway line (100) according to claim 1, **characterized in that** said rail bars (4) are standard-length rail bars (4) of 18 meters.

3. Process for the replacement of a worn or defective rail section (7) of a metro-railway line (100) according to any of the preceding claims, **characterized in that** the joint of the replacement rail section (5) to the rail still in place is carried out at a straight section of the line (100).

4. Process for the replacement of a worn or defective rail section (7) of a metro-railway line (100) according to any of the preceding claims, **characterized in that** said welding track is located in an open area with sufficient operational space and outside the normal train traffic zone of the metro-railway line, allowing for accurate non-destructive diagnostic checks of the welds performed.

5. Process for the replacement of a worn or defective rail section (7) of a metro-railway line (100) according to any of the preceding claims, **characterized in that** said metro-railway line (100) is a subway line.

6. Process for the replacement of a worn or defective rail section (7) of a metro-railway line (100) according to any of the preceding claims, **characterized in that** said metro-railway line (100) includes at least one section in a tunnel.

7. Process for the replacement of a worn or defective rail section (7) of a metro-railway line (100) according to any of the preceding claims, **characterized in that** said replacement rail section (5) is transported through a hauling locomotive towing rolling trolleys equipped with loading and unloading cranes provided with clamps for gripping the replacement rail section (5).

8. Process for the replacement of a worn or defective rail section (7) of a metro-railway line (100) according to claim 7, **characterized in that** said replacement rail section (5) has a linear weight comprised between 50 and 60 kg/m, and **in that** said rolling trolleys equipped with cranes have a load capacity comprised between 8,000 N and 12,000 N and they are positioned at a maximum distance of 15 meters from each other, and **in that** the ends of the replacement rail section (5) overhang the leading and trailing rolling trolleys by no more than 2 meters.

9. Process for the replacement of a worn or defective rail section (7) of a metro-railway line (100) according to claim 8, **characterized by** moving on-site said replacement rail section (5) through trestles equipped with movable cranes.

10. Process for the replacement of a worn or defective rail section (7) of a metro-railway line (100) according to any of the preceding claims, **characterized in that** a replacement rail section (5) is produced by trimming the excess metal formed during the pouring of molten metal in the welds, followed by grinding the residual burrs along the entire rail profile, including beneath the rail base, to achieve a final geometric profile at the welded joint identical to that of the joined rails.
